# EUROPÄISCHE PATENTSCHRIFT

(11) **EP 1 181 855 B1**
(45) Veröffentlichungstag und Bekanntmachung des Hinweises auf die Patenterteilung: **25.04.2007**
(21) Anmeldenummer: 01119083.2
(22) Anmeldetag: 08.08.2001
(51) Int. Cl.: A01B 61/02, A01B 59/00

(54) **Kupplungsvorrichtung**
Coupling device
Dispositif d'accouplement

(30) Priorität: 17.08.2000 DE 10040741
(43) Veröffentlichungstag der Anmeldung: 27.02.2002
(73) Patentinhaber: CLAAS Selbstfahrende Erntemaschinen GmbH, 33428 Harsewinkel (DE)
(72) Erfinder: Küsters, Hubertus, 33428 Harsewinkel (DE); Oldenburg, Joachim, 47589 Uedem (DE)

(56) Entgegenhaltungen:
- EP-A- 0 476 500
- DE-C- 579 711
- DE-C- 951 418
- US-A- 4 147 376
- US-A- 5 538 086

## Beschreibung

Die Erfindung betrifft eine Kupplungsvorrichtung zum Anbau eines Arbeitsgerätes, insbesondere eines landwirtschaftlichen Arbeitsgerätes an eine Zugmaschine, die vorzugsweise mit einem Bandlaufwerk ausgerüstet ist und die Kupplungsvorrichtung aus einer geräteseitigen und einer zugmaschinenseitigen Kupplungshälfte besteht, die durch mehrere Koppelstangen bewegbar miteinander verbunden sind.

Die in Frage kommende Kupplungsvorrichtung beim Einsatz für landwirtschaftliche Arbeitsgeräte wird als sogenanntes Dreipunktgestänge bezeichnet, welches einschlägigen Normen entspricht. Es besteht üblicherweise aus zwei höhengleichen Unterlenkern und einem mittig darüber angeordneten Oberlenker. Diese der Norm entsprechenden Dreipunktgestänge sind für Zugmaschinen bzw. Schlepper mit wenigstens zwei angetriebenen Rädern ausgelegt. Derartige Zugmaschinen haben einen sich aus der Lenkgeometrie der Achsen ergebenden Wendekreis mit einem relativ großen Durchmesser. Das Dreipunktgestänge ermöglicht es, dass das Arbeitsgerät sich gegenüber der Zugmaschine in geringem Maaße seitlich bewegen bzw. einstellen kann, was insbesondere bei angehängten Maschinen oder Geräten zur Bodenbearbeitung erforderlich ist. Dadurch ist auch eine Kurvenfahrt bei Fahrzeugen mit großem Wendekreis begrenzt möglich, ohne dass eine Überbeanspruchung der Koppelelemente auftritt wenn sich das angehängte Arbeitsgerät in der abgesenkten Arbeitsstellung zum Beispiel zur Bodenbarbeitung befindet.

Wegen ihrer geringeren Bodendruckbelastung werden heute vermehrt Zugmachinen mit einem Bandlaufwerk eingesetzt, deren Wendekreise deutlich geringer sind als die der Zugmaschinen mit lenkbaren Rädern. Daraus ergibt sich, dass die zuvor erläuterten Dreipunktgestänge für derartige Zugmaschinen, bedingt durch die möglichen, stärkeren Auslenkungen der Zugmaschine nur beschränkt einsetzbar sind

Aus der EP 0 948 882 A1 ist eine Kupplungsvorrichtung bekannt, die auch eine Lenkfunktion ermöglicht, so dass sich seitliche Kräfte, die das Arbeitsgerät auf die Zugmaschine überträgt reduziert sind. Dazu weist die Kupplungsvorrichtung eine starre, zentrale Koppelstange auf, um die herum drei ein Dreieck beschreibende Koppelstangen angeordnet sind, die in ihrer Länge verstellbar sind. Diese Koppelstangen bestehen aus Hydraulikzylindern, die aufgrund der zentralen Koppelstange nur relativ geringe Kräfte aufnehmen müssen. Um die Längen durch Ein- und Ausfahren der Kolbenstangen zu verändern, müssen die Hy-draulikzylinder gesteuert sein. Diese Art der Verstellung ist jedoch technisch aufwendig. Es wird deshalb noch vorgeschlagen, andere nach dem Linearprinzip arbeitende Koppelstangen zu verwenden, beispielsweise pneumatische Stellglieder oder Kugelumlaufspindel-Stellglieder. Die beiden letztgenannten Elemente kommen normalerweise für den Einsatz im landwirtschaftlichen Bereich nicht in Frage, da es notwendig würde, die Zugmaschinen einer entsprechenden pneumatischen oder elektrischen Anlage auszurüsten.

Aus der US PS 5 092 409 ist eine Kupplungsvorrichtung für den frontseitigen Anbau eines Arbeitsgerätes bekannt. Die Verbindungselemente bzw. Koppelstangen bestehen ebenfalls aus Hydraulikzylindern, so dass eine aufwendige Steuerung notwendig ist. Schließlich ist es noch aus der DE 196 37 547 A1 bekannt, die Kupplungshälften durch zwei V-förmig zueinander stehende Pendelstützen zu verbinden. Auch diese Lösung ist technisch aufwendig, da es notwendig ist, dass bei einer Verstellung der Pendelstützen mittels einer motorisch angetriebenen Einrichtung eine Rückstellung erfolgt. Eine derartige Kupplungsvorrichtung ist für ein landwirtschaftliches Arbeitsgerät nicht geeignet und wird bei der bestimmungsgemäßen Verwendung in den Kraftfluss eines Manipulatorarmes integriert, so dass eine Kupplungshälfte an dem Manipulatorarm angesetzt ist, während die andere Kupplungshälfte beispielsweise ein Werkzeug trägt.

Ausgehend von einem durch die EP 0 948 882 A1 vorbekannten Stand der Technik liegt der Erfindung die Aufgabe zugrunde, eine Kupplungsvorrichtung der eingangs näher beschriebenen Art so zu gestalten, dass keine nach dem Linearantriebsprinzip arbeitenden Bauelemente benötigt werden, so dass Steuerungen und dergleichen entfallen, so dass die Kupplungsvorrichtung unabhängig von der Ausrüstung einer Zugmaschine verwendet werden kann. Untersuchungen haben gezeicht, dass eine einfache Ausbildung der Dreipunktgestänge vollkommen ausreichen würde, wenn zumindest den Unterlenkern Mittel zugeordnetet würden die die auftretenden Druckspitzen aufnehmen würden.

Die gestellte Aufgabe wird mit den Merkmalen des Anspruchs 1 gelöst.

Bei der erfindungsgemäßen Kupplungsvorrichtung erfolgt die Verbindung der beiden, eine Koppelstange bildenden Stangenabschnitte ausschließlich durch mechanische Bauteile, so dass keine Energie in irgendeiner Form benötigende, hydraulische oder elektrische Bauelemente notwendig werden. Deshalb ist die erfindungsgemäße Kupplungsvorrichtung äußerst kostengünstig herstellbar und darüber hinaus störunanfällig.Bei Belastung des jeweiligen Stangenabschnittes durch Druck- oder Zugbelastung erfolgt eine nicht vorgegebene Bewegung der beiden Stangenabschnitte zueinander.

Eine einfache, hoch belastbare Ausführung ergibt sich daraus, daß ein im Verbindungsbereich der Stangenabschnitte liegender Endbereich eines Stangenabschnittes eine den Querschnitt vergrößernde, formstabile Aufweitung aufweist, und dass der Verbindungsbereich des zugehörigen Stangenabschnittes derart gehäuseartig gestaltet ist, dass sich ein Freiraum ergibt, in dem der Stangenabschnitt mit der Aufweitung eingesetzt und geführt ist. Die danach verbleibenden Freiräume zwischen den Gehäusewandungen und der Stangenaufweitung sind hahezu völlig mit elastischen, verformbaren Ausgleichskörpern ausgefüllt. Durch eine derartige Gestaltung wird eine Verbindung erreicht, wobei die elastisch verformbaren Ausgleichskörper zwar der Übertragung der Kräfte dienen, jedoch auch eine freie Beweglichkeit der beiden Stangenabschnitte zulassen. Die Formgebung der Ausgleichskörper richtet sich nach der Gestaltung der Endbereiche der Stangenabschnitte. Die. Aufweitungen, sind im Horizontalschnitt mehreckig, vorzugsweise viereckig ausgebildet, wobei die Außenflächen der Aufweitung unter einem stumpfen Winkel, vorzugsweise unter einem Winkel von 135 Grad zu den angrenzenden Bereichen der Stangenabschnitte stehen. Der Querschnitt der Aufweitung ist dann vorzugsweise im Horizontalschnitt quadratisch bzw. an den Endbereich eines Stangenabschnittes sind beidseitig Dreiecke angesetzt. Durch die Schrägstellung der vorstehenden Flächen wird die Beweglichkeit der ineinander greifenden Stangenabschnitte erhöht. Damit sich die Lenker im Normalbetrieb in ihrer Länge stabil verhalten sind die elastischen Ausgleichskörper in den Eckbereichen des gehäuseartig gestalteten Endbereich eines Stangenabschnittes schließend eingesetzt. Dadurch entsteht eine spielfreie Verbindung. Damit sich die Ausgleichskörper bei einer Belastung eines Stangenabschnittes hinreichend verformen können, ist vorgesehen, dass die der Aufweitung, jedoch dem Stangenabschnitt zugewandten Eckbereiche freigeschnitten sind. Dadurch wird verhindert, dass die Ausgleichskörper derart stark verformt werden, dass es zu einer Beschädigung führen kann. Diese Verformbarkeit wird noch begünstigt, wenn die den freigeschnittenen Flächen zugeordneten Eckbereiche des gehäuseartigen Endbereiches schräg zum Stangenabschnitt verlaufen. Zur Übertragung der Kräfte ist es zweckmäßig, wenn die Ausgleichselemente Massivkörper sind und aus Gummi oder einem gummiähnlichen Kunststoff gefertigt sind. Gegebenenfalls könnten in die Ausgleichselemente noch Verstärkungsteile eingebettet sein.

Bei einer anderen Ausführung ist es jedoch auch denkbar, dass die Ausgleichselemente durch Federelemente, wie Schraubenfedern und dergleichen gebildet sind. Zweckmäßigerweise wären zwei Federelemente in Reihe in einem Gehäuse angeordnet, wobei an einem Stangenabschnitt ein Teller angesetzt ist, der zwischen den beiden Federelementen liegt. Die Aufweitungen bzw. Aufweitungen sind bevorzugt einstückig mit dem Endbereich des Stangenabschnittes ausgebildet. Es ist jedoch in einer anderen Ausführung möglich, dass entsprechende Profile fest mit dem Stangenabschnitt verbunden sind. Die Stangenabschnitte bestehen zweckmäßigerweise aus Flachstahlprofilen, die in der Betriebsstellung hochkant stehen.

Anhand der beiliegenden Zeichnungen wird die Erfindung noch näher erläutert.

Es zeigen:
- Figur 1: Eine Zugmaschine und ein daran mittels der erfindungsgemäßen Kupplungsvorrichtung angekoppeltes Arbeitsgerät in einer Seitenansicht,
- Figur 2: eine der Fig. 1 entsprechende Draufsicht, rein schematisch,
- Figur 3: die Verbindung der beiden Stangenabschnitte einer Koppelstange in einem Horizontalschnitt zeigend, in einer ersten Ausführung,
- Figur 4: die Verbindung der beiden Stangenabschnitte einer Koppelstange in einem Horizontalschnitt, in einer zweiten Ausführung,
- Figur 5: ein Schnitt längs der Linie V-V in der Fig. 3 und
- Figur 6: die Verbindung der beiden Stangenabschnitte einer Koppelstange in einer weiteren Ausführungsform, rein schematisch.

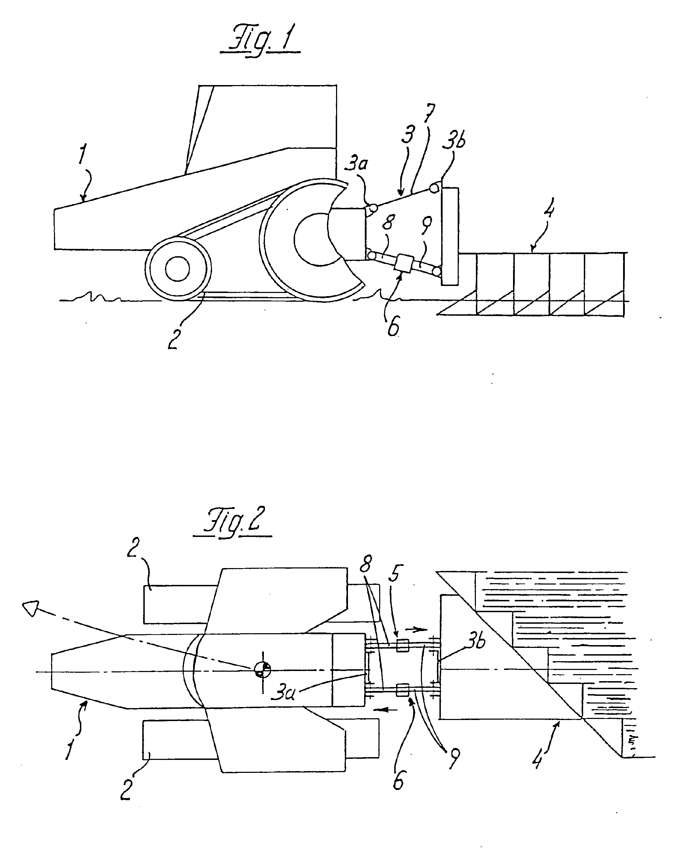

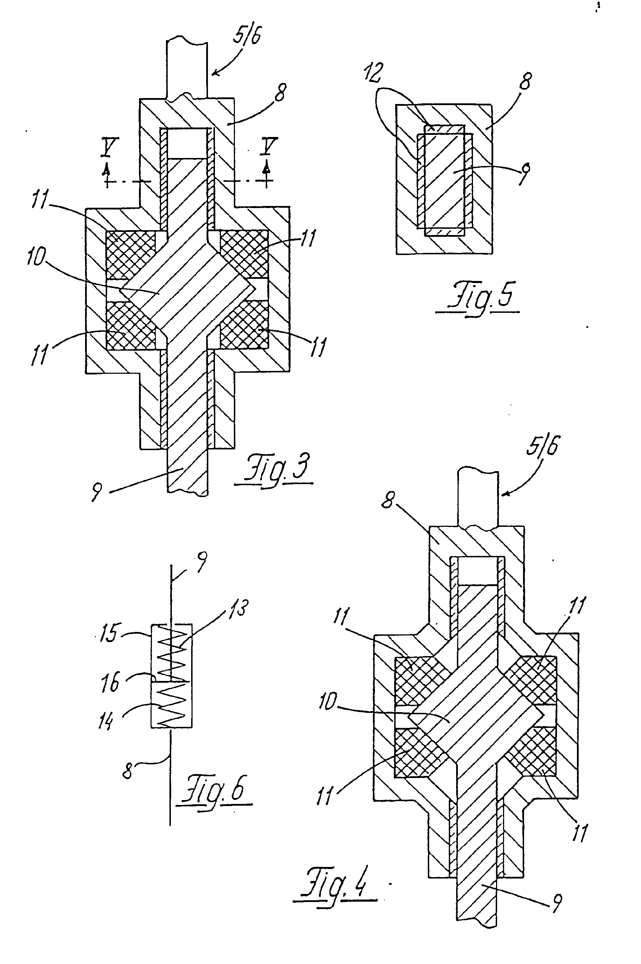

Die Fig. 1 und 2 zeigen rein schematisch eine Zugmaschine 1, die mit einem Bandlaufwerk 2 ausgerüstet ist. Mittels einer noch näher erläuterten Kupplungsvorrichtung 3 ist im dargestellten Ausführungsbeispiel rückseitig ein Arbeitsgerät 4 angehängt, welches im dargestellten Ausführungsbeispiel ein Bodenbearbeitungsgerät in Form eines Pfluges ist. Die Kupplungsvorrichtung 3 besteht aus den beiden Kupplungshälften 3a und 3b, die über zwei untere Koppelstangen 5, 6 und einer mittig darüber angeordneten oberen Koppelstange 7 miteinander verbunden sind. Die Koppelstange 7, die den Oberlenker darstellt, bildet im Zusammenwirken mit den unteren Koppelstangen 5, 6 das Dreipunktgestänge der hydraulischen Hebereinheit.

Die Fig. 3 und 4 zeigen, dass die unteren Koppelstangen 5, 6 aus jeweils zwei Stangenabschnitten 8, 9 bestehen, die in noch näher erläuterter Weise beweglich miteinander verbunden sind. Dazu ist der Endbereich des Stangenabschnittes 8 nach Art eines Gehäuses ausgebildet, in den der Endbereich des anderen Stangenabschnittes eingreift bzw. eingesetzt ist. Im Abstand zum Stirnende des Stangenabschnittes 9 ist dieser mit einer im Grundquerschnitt quadratischen Aufweitung 10 versehen, so dass dreieckförmige Bereiche gegenüber den beiden Seitenflächen des Stangenabschnittes 9 vorstehen. Die Aufweitung 10 ist im dargestellten Ausführungsbeispiel einstückig mit dem Stangenabschnitt 9 ausgebildet. Es könnten jedoch auch entsprechende Profile an die beiden Seitenflächen des Stangenabschnittes fest angesetzt sein, beispielsweise durch Schweißung.

Im dargestellten Ausführungsbeispiel sind in die Eckbereiche des gehäuseartig gestalteten Endbereiches des anderen Stangenabschnittes 8 elastisch verformbare Ausgleichskörper 11 eingesetzt, die die zugehörigen Außenflächen der Aufweitung 10 kontaktieren. Die aufeinander zugerichteten, inneren Flächen der Ausgleichskörper 11 sind entsprechend der Außenkontur der Aufweitung 10 abgeschrägt.

Bei der Ausführung nach der Fig. 4 sind die jeweils äußeren, jedoch dem Stangenabschnitt 9 zugewandten Ecken ebenfalls freigeschnitten, damit die elastische Verformung der Ausgleichskörper 11 begünstigt wird. Diese Verformung wird noch günstiger, wenn die dem Stangenabschnitt 9 zugewandten Eckbereiche des gehäuseartigen Endbereiches des Stangenabschnittes 8 ebenfalls abgeschrägt sind.

Bei den Ausführungsbeispielen nach den Fig. 3 und 4 stehen die Kontaktflächen zwischen der Aufweitung 10 und den Ausgleichskörpern 11 unter einem Winkel von 135 Grad zu den Seitenflächen des Stangenabschnittes 9. Andere Formen sind denkbar, es muss jedoch der Formschluss zwischen den Endbereichen der Stangenabschnitte 8, 9 durch die Ausgleichskörper 11 sichergestellt sein. Zur Montage der beiden Stangenabschnitte ist es zweckmäßig, wenn der gehäuseartige Endbereich des Stangenabschnittes 8 zumindest zweiteilig ist. Diese beiden Teile könnten dann nach dem Einsetzen der Ausgleichskörper 11 miteinander verschraubt werden. Die Ausgleichskörper sind bevorzugt aus Gummi oder einem gummiähnlichen Kunststoff gefertigt. Andere geeignete Werkstoffe könnten jedoch auch zum Einsatz kommen.

Es ergibt sich aus den Fig. 3 und 4, dass bei diesen Ausführungsbeispielen die Stangenabschnitte 8, 9 sich ausschließlich in Längsrichtung gegeneinander bewegen können, da der Stangenabschnitt 9 schließend in den gehäuseartig gestalteten Endbereich des Stangenabschnittes 8 eingesetzt ist. Zur besseren Führung sind zwischen den einander zugewandten Flächen der Stangenabschnitte 8, 9 Lagerplatten 12 angeordnet, die aus einem Gleitlagerwerkstoff gefertigt sind. Der den gehäuseartig gestalteten Endbereich aufweisende Stangenabschnitt 8 kann entweder der zugmaschinenseitigen Kupplungshälfte 3a oder der geräteseitigen Kupplungshälfte 3b zugeordnet werden.

Die Fig. 6 soll verdeutlichen, dass als Ausgleichskörper auch Federelemente in Form von zwei Schraubenfedern 13, 14 verwendet werden können. Diese Schraubenfedern 13, 14 sind in ein Gehäuse 15 eingesetzt, welches im dargestellten Ausführungsbeispiel mit dem Stangenabschnitt 8 fest verbunden ist. Der zugehörige Stangenabschnitt 9 greift in das Gehäuse 15 ein und trägt an seinem zugehörigen Ende einen Teller 16. Die beiden Schraubenfedern 13, 14 liegen beidseitig des Tellers 16, so dass sich der Stangenabschnitt 9 in beiden Richtungen gegenüber dem Stangenabschnitt 8 verschieben kann. Bei dieser Ausführung ist bevorzugt auch eine Schrägstellung der beiden Stangenabschnitte 8, 9 möglich.

Die Erfindung ist nicht auf die dargestellten Ausführungsbeispiele beschränkt. Wesentlich ist, dass die unteren Koppelstangen 5, 6 der Kupplungsvorrichtung 3 aus zwei Stangenabschnitten 8, 9 bestehen, die formschlüssig miteinander verbunden sind, und dass über elastische Ausgleichskörper 11 eine Bewegung der beiden Stangenabschnitte 8, 9 gegeneinander möglich ist.

### Bezugszeichenliste

- 1: Zugmaschine
- 2: Bandlaufwerk
- 3: Kupplungsvorrichtung
- 3a: Kupplungshälfte
- 3b: Kupplungshälfte
- 4: Arbeitsgerät
- 5: Koppelstange
- 6: Koppelstange
- 7: Koppelstange
- 8: Stangenabschnitt
- 9: Stangenabschnitt
- 10: Aufweitung
- 11: Ausgleichskörper
- 12: Lagerplatte
- 13: Schraubenfeder
- 14: Schraubenfeder
- 15: Gehäuse
- 16: Teller

## Patentansprüche

1. Kupplungsvorrichtung (3) zum Anbau eines Arbeitsgerätes (4), insbesondere eines landwirtschaftlichen Arbeitsgerätes an eine Zugmaschine (1), die vorzugsweise mit einem Bandlaufwerk (2) ausgerüstet ist und die Kupplungsvorrichtung (3) aus einer geräteseitigen und einer zugmaschinenseitigen Kupplungshälfte (3a, 3b) besteht, die durch mehrere Koppelstangen (5, 6, 7) bewegbar miteinander verbunden sind,
**dadurch gekennzeichnet,**
**dass** zumindest zwei Koppelstangen (5, 6) aus jeweils wenigstens zwei Stangenabschnitten (8, 9) gebildet sind, die derart miteinander verbunden sind, dass beim Einwirken von durch Druck - und Zugbelastung erfolgenden Kräften auf mindestens einen Stangenabschnitt (8, 9) einer Koppelstange (5, 6) die beiden Stangenabschnitte (8, 9) im Verbindungsbereich längenverändernd gegeneinander bewegbar sind und dadurch erreicht, dass ein im Verbindungsbereich liegender Endbereich eines Stangenabschnittes (9) eine den Querschnitt vergrössernde, formstabile Aufweitung (10) aufweist, und dass der Verbindungsbereich des zugehörigen anderen Stangenabschnittes (8) gehäuseartig gestaltet ist, in dem sich ein Freiraum ergibt, in den ein oder mehrere elastisch verformbare Ausgleichskörper (11) eingesetzt sind.

2. Kupplungsvorrichtung nach Anspruch 1,
**dadurch gekennzeichnet,**
**dass** die Aufweitung (10) im Horizontalschnitt mehreckig, vorzugsweise viereckig ausgebildet ist, und dass die Außenflächen der Aufweitung (10) unter einem stumpfen Winkel, vorzugsweise unter einem Winkel von 135 Grad zu den angrenzenden Bereichen bzw. Seitenflächen des Stangenabschnittes (9) stehen.

3. Kupplungsvorrichtung nach Anspruch 1 oder 2,
**dadurch gekennzeichnet,**
**dass** die elastischen Ausgleichskörper (11) in den Eckbereichen des gehäuseartig gestalteten Verbindungsbereiches des Stangenabschnittes (8) schließend eingesetzt sind.

4. Kupplungsvorrichtung nach einem oder mehreren der vorhergehenden Ansprüche 1 bis 3,
**dadurch gekennzeichnet,**
**dass** die den Kontaktflächen zwischen den Ausgleichskörpern (11) und der Aufweitung (10) abgewandten, den Stangenabschnitt (9) zugewandten Ecken der Ausgleichskörper (11) freigeschnitten sind.

5. Kupplungsvorrichtung nach einem oder mehreren der vorhergehenden Ansprüche 1 bis 4,
**dadurch gekennzeichnet,**
**dass** die, den die Aufweitung (10) aufweisenden Stangenabschnitt (9) zugewandten Ecken des gehäuseartig gestalteten Endbereiches des anderen Stangenabschnittes (8) abgeschrägt sind.

6. Kupplungsvorrichtung nach einem oder mehreren der vorhergehenden Ansprüche 1 bis 5,
**dadurch gekennzeichnet,**
**dass** die Ausgleichselemente (11) massiv gestaltet und aus einem Gummi oder einem gummiähnlichen Kunststoff gefertigt sind.

7. Kupplungsvorrichtung nach einem oder mehreren der vorhergehenden Ansprüche 1 bis 6,
**dadurch gekennzeichnet,**
**dass** zwischen den einander zugewandten Flächen der beiden Stangenabschnitte (8, 9) Führungsplatten (12), vorzugsweise aus einem Gleitlagermaterial angeordnet sind.

8. Kupplungsvorrichtung nach Anspruch 1,
**dadurch gekennzeichnet,**
**dass** die Ausgleichskörper durch in Reihe angeordnete Federelemente (13, 14) gebildet sind, die innerhalb eines Gehäuses (15) angeordnet sind, dass ein Stangenabschnitt (8) das Gehäuse (15) trägt, und dass der andere Stangenabschnitt (9) am gehäuseseitigen Endbereich einen Teller (16) trägt, und dass die Federelemente (13, 14) beidseitig des Tellers (16) stehen.

## Claims

1. A coupling device (3) for mounting a working implement (4), in particular an agricultural working implement, to a tractor (1) which is preferably equipped with a track-laying running gear (2) and the coupling device (3) comprises an implement-side coupling half and a tractor-side coupling half (3a, 3b) which are movably connected together by a plurality of coupling rods (5, 6, 7),
**characterised in that**
at least two coupling rods (5, 6) are each formed from at least two respective rod portions (8, 9) which are connected together in such a way that when forces occurring due to compression and tensile loading act on at least one rod portion (8, 9) of a coupling rod (5, 6) the two rod portions (8, 9) are movable relative to each other to change the length thereof in the connecting region and **characterised in that** an end region, which is in the connecting region, of a rod portion (9) has an enlargement portion (10) which increases the cross-section and which is stable in respect of shape, and the connecting region of the associated other rod portion (8) is of a housing-like configuration in which there is a free space into which one or more elastically deformable compensating bodies (11) are fitted.

2. A coupling device according to claim 1 **characterised in that** the enlargement portion (10) is of a polygonal and preferably quadrangular configuration in horizontal section and that the outside surfaces of the enlargement portion (10) are at an obtuse angle and preferably at an angle of 135° relative to the adjoining regions or side surfaces of the rod portion (9).

3. A coupling device according to claim 1 or claim 2 **characterised in that** the elastic compensating bodies (11) are closingly inserted in the corner regions of the connecting region, of a housing-like configuration, of the rod portion (8).

4. A coupling device according to one or more of preceding claims 1 to 3 **characterised in that** the corners of the compensating bodies (11), which are remote from the contact surfaces between the compensating bodies (11) and the enlargement portion (10) and which are towards the rod portion (9) are cut free.

5. A coupling device according to one or more of preceding claims 1 to 4 **characterised in that** the corners, which face towards the rod portion (9) having the enlargement portion (10), of the end region of a housing-like configuration of the other rod portion (8) are bevelled.

6. A coupling device according to one or more of preceding claims 1 to 5 **characterised in that** the compensating elements (11) are solid and are made from a rubber or a rubber-like plastic material.

7. A coupling device according to one or more of preceding claims 1 to 6 **characterised in that** guide plates (12), preferably of a sliding bearing material, are arranged between the mutually facing surfaces of the two rod portions (8, 9).

8. A coupling device according to claim 1 **characterised in that** the compensating bodies are formed by spring elements (13, 14) which are arranged in line and which are disposed within a housing (15), that a rod portion (8) carries the housing (15) and that the other rod portion (9) carries at the housing-side end region a plate (16), and that the spring elements (13, 14) are on both sides of the plate (16).

## Revendications

1. Dispositif d'accouplement (3) pour le montage d'un outil (4), plus particulièrement d'un outil agricole sur un tracteur agricole (1) de préférence est équipé d'un train roulant à chenilles (2), dans lequel le dispositif d'accouplement (3) comprend deux moitiés d'accouplement (3a, 3b) respectivement côté outil et côté tracteur, qui sont liées l'une à l'autre avec possibilité de déplacement par plusieurs tiges de couplage (5, 6, 7), **caractérisé par le fait qu'**au moins deux tiges de couplage (5, 6) sont formées chacune d'au moins deux segments de tige (8, 9) liés l'un à l'autre d'une manière telle qu'en présence de forces résultant de sollicitations de compression et de traction qui agissent sur au moins un segment de tige (8, 9) d'une tige de couplage (5, 6), les deux segments de tige (8, 9) se déplacent l'un par rapport à l'autre en faisant varier la longueur, **par le fait qu'**une portion d'extrémité d'un segment de tige (9) située dans la zone de liaison présente un renflement (10) indéformable qui augmente la section transversale de la tige et que la zone de liaison de l'autre segment de tige (8) associé est conformée en boîtier délimitant un espace libre à l'intérieur duquel est ou sont monté(s) un ou plusieurs éléments compensateur(s) (11) élastiquement déformable(s).

2. Dispositif d'accouplement selon la revendication 1, **caractérisé par le fait que** le renflement (10), vu en coupe horizontale, présente une forme polygonale, de préférence rectangulaire, et que les surfaces extérieures du renflement (10) forment un angle obtus, de préférence de 135 degrés, avec les parties voisines ou les surfaces latérales du segment de tige (9).

3. Dispositif d'accouplement selon la revendication 1 ou 2, **caractérisé par le fait que** les éléments compensateurs (11) sont montés dans la région des angles de la zone de liaison conformée en boîtier du segment de tige (8) et ferment celui-ci.

4. Dispositif d'accouplement selon une ou plusieurs des revendications 1 à 3, **caractérisé par le fait que** les angles des éléments compensateurs (11) éloignés des surfaces de contact entre les éléments compensateurs (11) et le renflement (10) et tournés vers le segment de tige (9) sont coupés.

5. Dispositif d'accouplement selon une ou plusieurs des revendications 1 à 4, **caractérisé par le fait que** les angles de la partie d'extrémité conformée en boîtier de l'autre segment de tige (8) tournés vers le segment de tige (9) comportant le renflement (10) sont chanfreinés.

6. Dispositif d'accouplement selon une ou plusieurs des revendications 1 à 5, **caractérisé par le fait que** les éléments compensateurs (11) sont massifs et sont réalisés en caoutchouc ou en un matériau similaire.

7. Dispositif d'accouplement selon une ou plusieurs des revendications 1 à 6, **caractérisé par le fait que** des plaquettes de guidage (12), de préférence en un matériau à coussinets, sont disposées entre les surfaces en vis-à-vis des deux segments de tige (8, 9).

8. Dispositif d'accouplement selon la revendication 1, **caractérisé par le fait que** les éléments compensateurs sont formés de ressorts (13, 14) montés en série qui sont disposés à l'intérieur d'un boîtier (15), qu'un segment de tige (8) porte le boîtier (15) et que l'autre segment de tige (9), à son extrémité côté boîtier, porte un plateau (16) et que les ressorts (13, 14) sont disposés de part et d'autre du plateau (16).
